**Europäisches Patentamt**

**European Patent Office**

**Office européen des brevets**

(11) Publication number: **0 405 919 A1**

# EUROPEAN PATENT APPLICATION

(21) Application number: **90306988.8**

(22) Date of filing: **26.06.90**

(51) Int. Cl.⁵: **F02B 43/12, F02M 25/02**

(30) Priority: **27.06.89 AR 314254**

(43) Date of publication of application:
**02.01.91 Bulletin 91/01**

(84) Designated Contracting States:
**AT BE CH DE DK ES FR GB GR IT LI LU NL SE**

(71) Applicant: **Aguero, Juan Carlos**
**5055 Lopez y Planes St.**
**5000 Cordoba, Cordoba(AR)**

(72) Inventor: **Aguero, Juan Carlos**
**5055 Lopez y Planes St.**
**5000 Cordoba, Cordoba(AR)**

(74) Representative: **Gordon, Michael Vincent et al**
**GILL JENNINGS & EVERY 53-64 Chancery**
**Laneane**
**London WC2A 1HN(GB)**

(54) **Water propelled internal-combustion engine system.**

(57) An energy transforming system is disclosed for driving, for instance, an internal combustion engine which uses hydrogen gas as its fuel. The gas is obtained by electrolysing water on board and is then injected into the combustion chambers. The electrolysis is carried out in an electrolytic tank 15 energized with electric current generated by the engine. The hydrogen passes from a reservoir 23 via collector cylinder 29 to carburettor device 39. The hydrogen is then fed into the engine together with dry saturated steam and at least part of the hydrogen may be heated 51 prior to admission. A cooler and more controlled combustion is achieved with the steam and furthermore relatively lesser amounts of hydrogen are required. This is probably caused by the steam acting as a temperature moderator during admission and combustion of the hydrogen and additionally expanding during the expansion stroke.

EP 0 405 919 A1

## WATER-PROPELLED INTERNAL-COMBUSTION ENGINE SYSTEM

### Field of the Invention:

The present invention refers to energy-converter systems, in particular related to an internal combustion engine fuelled by hydrogen gas, i.e. wherein the main propellent admitted to the combustion chambers is hydrogen. More particularly still, the present invention refers to method and means for obtaining hydrogen gas in an efficient and reasonably economical manner, and for supplying the gas to the combustion chambers under conditions for controlled ignition and optimum energy conversion results. The present invention also refers to means and method for running an internal-combustion engine system from an available, cheap and non-contaminant hydrogen containing matter such as water as a fuel supply.

In general, the invention may find application in any system employing internal combustion principles, ranging from large installations such as electricity works to relatively smaller automobile systems like locomotives, lorries, motor-cars, ships and motor-boats. In the ensuing description the invention is generally disclosed for application in the automotive field, however its adaption and application in other fields may also be contemplated within the purview of the present invention.

### Background Art:

Dwindling natural resources, dangerous contamination levels, increasing prices and unreliable dependance on other countries are making it increasingly necessary to search an alternative to fossil fuels like oil (hydrocarbons) and oil derivatives as the primary energy source in automobiles. To-date none of the attempted alternatives appears to have proved its worth as a substitute for petrol, either because of inherent drawbacks as to contamination, safety, cost, etc. or because man has not yet been able to find a practical way of applying the alternative energy forms to domestic motor-cars.

For instance, electricity is a good alternative in the ecological sense, both chemically and acoustically, however it appears to be the least efficient form of energy known, which together with the high cost of manufacture of electric motors and the severe storage limitations insofar capacity and size have stopped it from coming into the market at least for the time being. The same is generally true even when solar energy is concerned.

Nuclear power is efficient, available and relatively cheap, but extremely perilous. Synthetic fuels may certainly be the answer in the future, however it appears that none practical enough have been developed. Use of gases such as methane or propane, or of alcohol distilled from sugarcane servings, has also been tried, but for one reason or another its marketing has been limited to small regions. Methanol for instance is a promising synthetic fuel, but it is extremely difficult to ignite in cold weather and has a low energy content (about half that of petrol).

The use of hydrogen gas as a substitute for petrol has been experimented lately. The chemistry investigator Derek P. Gregory is cited as believing that hydrogen is the ideal fuel in not just one sense. Hydrogen combustion produces steam as its only residue, a decisive advantage over contaminating conventional fuels such as petrol and coal. Unfortunately, hydrogen hardly exists on earth in its natural free form but only combined in chemical compounds, from which it must be extracted using complicated, expensive and often hazardous industrial processes. In addition, if this obstacle were overcome, it would still be necesary to transport and store the hydrogen in service stations and moreover find a safe and practical way of loading and storing it in motor vehicles. Mercedes-Benz for one is experimenting with a vehicle equipped with a special tank for storing hydrogen gas and means for supplying the gas to the injection system, instead of the conventional petrol tank and circuit, without however yet achieving a satisfactory degree of safety and cost-efficiency. The use of dry hydrogen gas as a propellant has heretofore been found to produce a generally uncontrolled ignition, a large temperature excursion upwards which proved too distructive for the chamber walls. The engine life was limited to less than 10,000 km (about 6,000 miles)

### Disclosure of the Invention:

The invention is based on the discovery of an energy-converter system to run an internal combustion engine and particularly is based on the discovery of a method and means for reliably, economically, safely and cleanly fuel an internal combustion engine with hydrogen, and obtain the hydrogen in a usable form to this end from a cheap and plentifully available substance such as water. The hydrogen may be generated in optimum conditions to be fed into the engine.

According to the invention, hydrogen is obtained on board from a readily available hydrogenous source such as ionized water which is subjected to electrolysis, from whence the hydrogen is injected in each cylinder of the engine on the admission stroke. The hydrogen gas is mixed with water-vapour (steam at atmospheric temperature) and surrounding air, and when this mixture is ignited within the combustion chamber, the steam (vapour) seems to act as a temperature moderator first and then assist in the expansion stroke. Preferably, the steam is dry saturated steam which, as a moderator, limits the maximum temperature of the combustion, thus helping to preserve the cylinder, valve and piston elements; and in assisting the expansion, the steam expands fast to contribute extra pressure on the piston head, increasing the mechanical output power of the engine. In other words, the inclusion of steam in the hydrogen propellant as suggested by the present invention moderates the negative effects of hydrogen and enhances the positive effects thereof in the combustion cycle.

As a result of this discovery, the amount of hydrogen required to drive the engine is lower than was heretofore expected, hence the electrolysis need not produce more than 10 cc/sec (for example, for a 1,400 cc engine). Thus the amount of electricity required for the electrolysis, a stumbling block in earlier attempts, is lower, so much so that hydrogen production on-board is now feasible.

The invention includes an apparatus comprising a first system for generating hydrogen and a second system for conditioning and suppling the hydrogen to the admission valves on the cylinder caps. The hydrogen-generating system basically consists of an electrolysis device which receives electrolitically adapted (i.e. at least partially ionized) water or some other suitable hydrogenous substance. An electric power supply is connected to the electrodes of the electrolysis device for generating the hydrogen, and the electricity requirements and the device dimensions are designed for a maximum hydrogen output rate of about 10 cc/sec for a typical automotive application.

The second system comprises means such as a vacuum pump or the like to draw out the hydrogen from the first system, means for supplying the hydrogen gas to the admission valves, means for conditioning the moisture content of the hydrogen, carburettor means or the like for mixing the hydrogen with atmospheric air or some other combustion enabling substance, and means to control and maintain a specified gas pressure valve or range for the hydrogen supplied to the mixing means.

The apparatus was tested and worked suprisingly well. It was discovered that this seemed to be the result of the steam content in the electrolytic hydrogen gas overcoming the pitfalls encountered in the prior art systems which injected relatively dry gas into the cylinder chambers, or at the most with a relatively small proportion of humidity coming from the air itself.

In the preferred embodiment, the electrolysis system is driven with a pulsed DC power signal of between and 80 Amps at between 75 and 100 Volts. The electrolyte is distilled water salted with sodium chloride with a concentration of about 30 grammes salt per litre of water to 150 grammes of salt in 10 litres of water. Other concentrations are possible depending on the kind of engine, fuel and electricity consumption etc. The maximum rate of hydrogen production required for a typical domestic car-engine has been estimated at 10 cc/sec. This hydrogen is drawn out by a pump generating a pressure head of around 2 kg/cm$^2$ to feed the generated steam-containing hydrogen to a receptable provided with means for removing the undesired excess of moisture from the gas. The gas is thus mixed with the desired content of steam when it enters the carburettor or mixing means.

In the event the generated hydrogen does not have enough steam content, dry saturated steam may be added to the hydrogen is process to the engine, conveniently before entering the carburettor and mixing with intake air. Part of the gas may be shunted via a serpentine mounted in heat-exchange relationship with the exhaust manifold, to heat some of the gas before injecting it into the base of the carburettor; this heated injection operating like supercharging. The main hydrogen stream, unheated, is directly piped in at the venturi system of the carburettor, where it mixes with air drawn in by the admission stroke vacuum.

Brief Description of the Drawings:

Figure 1 is a schematical layout of the first and second systems and shows the electrolysis device for obtaining hydrogen, and the circuit means for injecting the steam-laden hydrogen into the combustion chambers of a motor-car engine, according to an embodiment of this invention.

Figure 2 is an elevational view of the electrolysis device of figure 1.

Detailed Account of an Embodiment

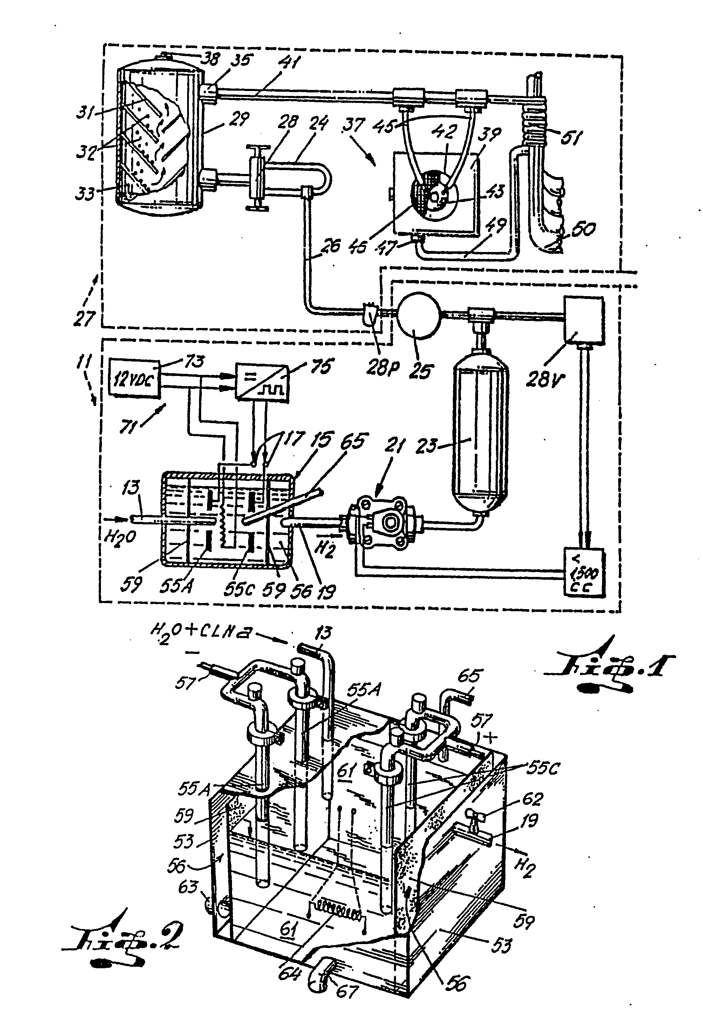

Figure 1 shows a system 11 for obtaining hydrogen front water piped from a depot or tank (not illustrated) to an inlet 13 of an electrolysis cell 15. The water is salted, such as by adding sodium chloride in the water depot, to ionize it and enable electrolysis upon energization by electric power applied to a pair of terminals 17. As disclosed in more detail further on herein, the power applied to the terminals 17 is in the form of a DC pulse signal of 65 Amps at 87 Volts, generated via suitable converter means from, in the event the present system is applied to an automobile, the standard automotive 12 Volt DC level. The device 15 has various outlets, one of which is the hydrogen gas outlet 19 which is connected through a solenoid valve 21 to an accumulator or reservoir cylinder 23. Other outlets of the electrolisis device 15 are for removing electrolisis effluents such as sodium hidroxide and chloride gas, to which further reference is made hereinbelow.

A vacuum pump 25 or the like extracts gas from the reservoir 23 for channelling through a hydrogen circuit system 27. Thus the reservoir 23 acts as a pressure buffer of a systems interface between the electrolysis device 15 and the pump 25. The reservoir 23 may be a 2,000 cc capacitity, stainless-steel cylinder with the valve 21 metering the passage of gas thereto so that the reservoir is initially filled with about 1,500 cc of hydrogen at normal pressure and temperature (NPT) conditions. To this end this cylinder 23 may be provided with a gauge 28V which electronically controls the state of the valve 21. This valve 21 may be a Jefferson Model SPS solenoid valve available from OTASI, Santa Rosa 556, Córdoba, Argentina. The vacuum pump 25 is a diaphragm-type device with a pulley drive and is coupled by means of a transmission belt to the engine's crankshaft output. Such a device 25 may be a Bosch model available in Germany. The pulley drive is decoupled by an electromagnetic clutch when the pressure read by a gauge 28P screwed in the outlet side of the pump 25 exceeds 2kg/sq cm.

The pump 25 sends hydrogen through a tubing 26, which also includes a by-pass 24 provided for inspection and safety purposes together with a two-way valve 28, and into a second cylinder 29 containing means 31 which cause a turbulence or a labyrinthine movement in the gas for condensing the heavy mixture, schematically shown as droplets 32, present in the ads stream. The condensed mixture collects in the form of distilled water 33 at the bottom of the cylinder 29. Near the top thereof there is an outlet 35 from whence hydrogen gas laden with a good amount of steam is transported to mixer means 37. Also at the top of the collector cylinder 29 there is a temperature sensor device 38 which is connected to an electronic digital thermometer circuit (not shown).

Mixer 37 comprises a carburettor device 39 for mixing hydrogen with air (oxygen) prior to feeding the mixture to the combustion chambers. The former is piped through a $\emptyset 3/8"$ tube 41 from the dryer cylinder 29 and then into the venturi section 43 of the carburettor 39 through a pair of $\emptyset 5/16"$ tubes or hydrogen injecting nozzles 45 (N.B.: $\emptyset$ indicates diameter size). The venturi section 43 is a section of the intake air passage which narrows to increase the air speed at the point where hydrogen is drawn out for the mix. The venturi intake 42 may be conveniently covered by a mesh 46, however, no air-filter has appeared to be necessary for the good operation of the mixer. The carburettor device 39 may be a simplified form of a conventional carburettor, since the propellant, i.e. hydrogen gas, is fed directly to the venturi 43. A butterfly valve or the like connected to an accelerator pedal (not illustrated) of the motor-car controls the air intake rate and therefore engine speed. This mixer device 39 is mounted as is a conventional carburettor, such that its outlet at the bottom communicates with the admission valves in the cylinder caps.

At the bottom part of the carburettor there is a supplementary hydrogen intake 47 connected to another $\emptyset 3/8"$ conduit 49 which shunts part of the hydrogen through a heater 51. This heater comprises a serpentine tube 51 of a cromium-and-cobalt alloy which is mounted in close heat-exchange relationship on the body of the exhaust manifold 50 (schematically illustrated) in order to add a portion of heated gas to the fuel mixture before it is drawn into the combustion chambers through tile corresponding admission valves on the cylinder caps. This pre-admission heating step takes the hydrogen mixture to a near critical temperature for detonation. It has been found that this improves performance (e.g. the engine smoothness) at some speed ranges and works like in a supercharging mode.

In practice, the engine of the present invention has shown a high efficiency when using three-electrode sparking plugs and an electronic ignition system (not illustrated).

Figure 2 shows in more detail the electrolysis cell 15 outlined in figure 1. It comprises a rectangular prism reservoir 53 with a pair of spaced-apart vertical electrodes 55. The reservoir may measure for instance 24 cm long by 20 cm wide and 28 cm high. Both the anode and cathode 55 may each comprise double electrodes of carbon having a spacing between the electrodes 55 of the same polarity of about 10 cm. Alternatively the anode 55A may be a ring made of carbon while the cathode 55C is an iron-mesh cylindrical electrode. Each electrode 55 has a terminal 57 at the top for inputting electric power as mentioned hereinbefore. At each outer side of the electrodes 55 there is a porous membrane 59 made from a sheet of amianto for holding the water solution 61 in whilst at the same time letting the electrolysis products, i.e. hydrogen and oxygen, pass through. Thus, the hydrogen gas passes through the membrane 59 into a gas collector chamber 56 and exits out through conduit 19 for fuelling the combustion engine. The hydrogen conduit 19 may be provided with a proportioning valve 62 for regulating the hydrogen outlet. The oxygen on the other hand may be vented out into the atmosphere through an outlet 63.

There is a heater device 64 dipped in the salted motor 61 and comprised by an electric resistor connected to a 12 Volt DC supply for heating the water to about 85°C (185°F) to enhance the galvanic action of the electrolysis current on the aquous solution 61. A thermostat may be used to control the water temperature such as by means of a solid state silicon thermal sensor device connected to a threshold comparator and from here to a relay controlling the current in the resistor 64.

The electrolysis of the heated salted water solution 61 further produces, as effluents, chloride gas ($Cl_2$) and sodium hydroxide (NaOH). The former may be vented through an opening 65 at the top of the reservoir 53 or else stored in an appropiate disposal tank (not shown). The sodium hydroxide precipitates and may be periodically removed through a tap 67 at the bottom.

It is important to notice that the practice of the present invention requires practically no modifications in the engine itself. That is, existing current petrol-fuelled motors may be used with hardly any adjustments. Ignition is initiated at the dead top of the compression stroke or with and a $1\frac{1}{2}°$ degree lag at the most and it has been found convenient to widen the gaps of the admission and exhaust valve pushers and use tri-electrode sparking plugs. However it is advisable to use some rustless compound such as plastics for the exhaust pipe and silencer, bearing in mind that the combustion residue is hot steam.

Figure 1 also shows schematically the electric power supply 71 connected to the terminals 17 of the cube 15. Electrical current is obtained at 12 volt DC from the car battery/alternator system 73 and processed by an inverter device 75 for generating DC pulses of 65 Amps at 87 Volts. Pulse energization of the electrolysis appears to maximize the ratio of hydrogen output rate to electric power input.

## Claims

1. A method of providing propellent to an internal combustion engine wherein combustion is fuelled on the basis of hydrogen gas admitted into at least one combustion chamber of the engine during the intake stroke, characterised in that the hydrogen is injected into the combustion chamber together with vapour.

2. The method of claim 1, characterised in that the surrounding air enters the combustion chamber, together with the hydrogen and vapour.

3. The method of claim 2, characterized in that the hydrogen gas is obtained from water which is continously subjected to electrolysis energized by the engine.

4. The method of claim 2 or 3, characterised in that the hydrogen is generated at a rate of not more than 10 cc/sec.

5. The method of any of the preceding claims, characterised in that the engine drives a motor-car.

6. The method of any of preceding claims, characterised in that the vapour is added to the hydrogen prior to entering the combustion chamber.

7. The method of any of claims 1 to 5, characterised in that the vapour is contained in the hydrogen when generated.

8. The method of any of the preceding claims, characterised in that the vapour is dry saturated steam.

9. A method of driving a internal combustion engine with water as its primary source of energy, characterised by the steps of:
subjecting the water to hydrolisis thereby producing gaseous hydrogen, and
controllably supplying the hydrogen produced by the hydrolisis to the engine combustion chambers during the admission stroke of each cylinder together with a proportion of steam.

10. The method of claim 9, characterised in that the steam is dry saturated steam.

11. The method of any of claims 9 or 10, characterised in that the hydrolisis driven by electric power to produce not more than 10 cc/sec of the hydrogen gas.

12. The method of any of claims 9 to 11, characterised in that the engine drives a motor-car including a water depot as its main propellant supply.

13. The method of any of claims 9 to 12, characterised in that at least part of the hydrogen is heated before injecting it into the chamber

14. The method of any claims of 9 to 13, characterised in that steam is obtained together with the hydrogen gas from the electrolysis and then subjected to a drying cycle up to a predetermined point of saturation before being passed into the chambers.

15. The method of claim 11, characterised in that the hydrolisis means is supplied with about 5 kW pulsed electrical power.

16. A method of injecting propellent into an hydrogen-driven internal combustion engine cylinder during the admission stroke thereof, characterised in that dry steam is passed into said cylinder during the intake stroke to moderate temperature generation of the hydrogen ignition and enhance expansion after ignition has begun to increase the power of the pistons.

17. A method of obtaining hydrogen capable of being used to fuel an internal combustion engine, characterised by dissociating hydrogen gas from a hydrogenous compound, and admitting the hydrogen gas into each cylinder of said engine together with an amount of dry steam.

18. The method of claim 17, characterised in that the hydrogen gas is admitted to the engine cylinders at a rate of not more than 10 cc/sec.

19. The method of claim 17 or 18, characterised in that the compound is slightly salted water and the steam is saturated steam.

20. A system for obtaining and providing hydrogen propellent to an internaL combustion engine including at least one cylinder containing a piston which is subjected to succesive combustion cycles and injection means for admitting fuel into the cylinder on the intake or admission stroke of the cycle, characterised by comprising:

fuel source means for containing a hydrogenous compound,

electrolysis means (15) having at least a pair of electrodes (55) for receiving electric power and intake means (13) connected to said source means for supplying said compound to the electrolysis means,

means (27, 37) for extracting hydrogen gas from one of said electrodes of the hydrolisis means and supplying it to said cylinder injection means, and

control means (25, 28, 29) for controlling the supply of hydrogen gas to the cylinder injection means whereby the rate of gas consumption in the engine is not more than 10 cc/sec.

21. The system of claim 20, characterised in that the means supplying hydrogen gas to the cylinder injection means further include means (37) for mixing said hydrogen gas with steam.

22. The system of claim 20 or 21, characterised in that the compound is water and the source means includes a water depot, the water including salt to facilitate electrolysis.

23. The system of claim 20, 21 or 22, characterised in that the control means include means (29) for removing the excesive moisture from the hydrogen gas extracted from the hydrolisis means.

24. The system of any of claims 20 to 23, characterised in that the electrolysis means is energized by the engine.

25. An internal combustion engine operating on hydrogen and having a water tank as its primary source of combustion fuel, a cylinder block containing at least one cylinder chamber, each chamber, having an associated piston, fuel intake means, ignition means, and exhaust means, and crankshaft means coupled to be driven by the pistons for providing mechanical output power from the engine, and characterised by further comprising:

electrolysis means (15) connected to the water tank for electrolysing water to obtain hydrogen, electrical means (17) connected to supply electric power to at least one pair of electrodes (55) of the electroLysis means for carrying out the electrolysis of the water, and

hydrogen circuit means (27) for extracting the hydrogen gas from the electrolysis means and passing it onto said intake means in a manner enabling controlled ignition and expansion of the fuel in the chamber.

26. The engine of claim 25, characterised in that said hydrogen circuit means passes hydrogen gas to the intake means at a rate of not more than 10 cc/sec.

27. The engine of claim 25 or 26, characterised by further comprising means for adding steam into each chamber before ignition of the hydrogen.

28. The engine of claim 27, characterised in that the steam adder means comprises means (25) for extracting steam from the electrolysis means, and means (29) for subjecting said steam to a drying process up to a pre-determined point.

29. The engine of any of claims 25 to 28, characterised by further comprising means (49, 51) for heating at least part of the hydrogen gas before it is passed into the chambers.

30. The engine of claim 29, characterised in that said heating means is a serpentine (51) inserted in a shunt (49) of the hydrogen circuit means and mounted in heat-exchange relationship on a manifold exhaust of the engine.

31. The engine of any of claims 25 to 30, characterised in that said electrical means include pulse generator means for supplying electrical pulses to said at least one pair of electrodes.

32. The engine of claim 31, characterized in that said pulse generator means supplies electrical DC pulses of between 50 and 75 Amps at between 60 and 100 Volts.

33. The engine of any of claims 25 to 32, characterised in that said hydrogen circuit means includes drying means (33) for removing excess moisture from the hydrogen extracted from the electrolysis means.

34. The engine of any of claims 25 to 33, characterised in that said crankshaft means drives a water-fuelled automobile.

35. The engine of any of claims 25 to 34, characterised in that the electrolysis means is driven by electricity derived from the engine.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 983 882 (BILLINGS) <br> * Claims 1,5,11,12; figure 3 * | 1,2,5,6 | F 02 B 43/12 <br> F 02 M 25/02 |
| Y | | 3,9,16, 21,25, 27 | |
| | --- | | |
| X | US-A-4 271 793 (VALDESPINO) <br> * Claim 1, lines 6-12,15-20 * | 20 | |
| Y | | 3,9,17, 24,25 | |
| | --- | | |
| Y | GB-A-1 395 418 (GILEWSKI) <br> * Claim 1, lines 95-100; figure 1; page 2, lines 27-33 * | 16,17 | |
| A | | 13,30 | |
| | --- | | |
| A | FR-A-1 178 241 (CHARDONNEREAU) <br> * Whole document * | 12,34, 35 | |
| | ----- | | |

TECHNICAL FIELDS
SEARCHED (Int. Cl.5)

F 02 M
F 02 B

The present search report has been drawn up for all claims

| Place of search | Date of completion of the search | Examiner |
|---|---|---|
| THE HAGUE | 27-09-1990 | KLINGER T.G. |

EPO FORM 1503 03.82 (P0401)